# EUROPEAN PATENT SPECIFICATION

(11) **EP 2 599 703 B1**
(45) Date of publication and mention of the grant of the patent: **27.05.2015**
(21) Application number: 12194618.0
(22) Date of filing: 28.11.2012
(51) Int. Cl.: B62K 11/14

(54) **Handle switch device**
Griffschaltervorrichtung
Dispositif de commutation à poignée

(30) Priority: 02.12.2011 JP 2011264528
(43) Date of publication of application: 05.06.2013
(73) Proprietor: Toyo Denso Kabushiki Kaisha, Minato-ku, Tokyo 105-0004 (JP)
(72) Inventor: Tozuka, Tsutomu, 1053, Otagaya, Tsurugashima-shi, Saitama (JP); Nezu, Shigeharu, 1053, Otagaya, Tsurugashima-shi, Saitama (JP); Hojo, Keisuke, 1053, Otagaya, Tsurugashima, Saitama (JP)
(74) Representative: Kohler Schmid Möbus Patentanwälte

(56) References cited:
- EP-A2- 0 900 699
- EP-A2- 1 935 769
- DE-A1-102007 037 483
- FR-A3- 2 886 616
- JP-A- H05 238 463
- TW-B- 528 695
- US-A1- 2002 014 565

## Description

### Field of the Invention

The present invention relates to a handle switch device configured to be mounted to a handle of a vehicle.

### Description of the Related Art

Some of vehicles such as motorcycles have a handle switch device that is mounted to a bar handle for steering a wheel. EP-A1-1 935 769 is regarded as the closest prior art and discloses, a handle switch device having an inner casing disposed on an outer periphery of one end portion of the bar handle, an outer casing disposed to cover the inner casing, and switches e.g. microswitches electrically connected to a power source and accessories of the vehicle.

German Laid-open Patent Application No. 102007037483 discloses a multiple switch for a vehicle in which switching units and electrically conducting conductors connected to the switching units are arranged on a curved outer surface of a circuit carrier made from plastic.

In some cases, rainwater or the like enters the outer periphery of the inner casing of the handle switch device through the outer casing. It is therefore necessary to ensure electrical insulation between the microswitches disposed on the outer periphery of the inner casing and between cord connection terminals of each microswitch. To this end, a countermeasure for protection from water such as applying insulation paint is taken. However, this results in increased costs.

To protect a switch from water, a drain structure for draining water entering the switch to the outside of the switch has been known (see, Japanese Laid-open Patent Publications Nos. H9-185921 and H8-212874). However, the provision of a drain structure dedicated for protection from water results in complicated construction and increased costs.

In the case of using a number of electric cords to electrically connect microswitches of a handle switch device to a power source and accessories of a vehicle, it is not easy to handle the electric cords. Thus, a wiring operation becomes complicated and an operation to mount the handle switch device to a vehicle's handle becomes difficult.

### SUMMARY OF THE INVENTION

The present invention provides a handle switch device capable of ensuring electrical insulation between switches with a simple structure and capable of being easily mounted to a handle of a vehicle.

This invention provides a handle switch device as specified in claims 1 to 6.

With this invention, the passages defined by the ribs provided on the inner casing of the handle switch device each have a wiring guide function and a drain passage function, whereby electrical insulation between the switches of the handle switch device can be ensured with a simple structure, and a wiring operation for connecting electric cords to the switches, etc., and an operation for mounting the handle switch device to a vehicle's handle can be carried out with ease.

Further features of the present invention will become apparent from the following description of exemplary embodiments with reference to the attached drawings.

### BRIEF DESCRIPTION OF THE DRAWINGS

FIG. 1 is an exploded perspective view of a handle switch device according to a first embodiment of this invention;
FIG. 2 is a front view of an inner casing on which microswitches are disposed;
FIG. 3A is a section view taken along line A-A shown in FIG. 2;
FIG. 3B is a fragmentary enlarged view showing a D part shown in FIG. 3A;
FIG. 3C is a section view showing a modification of a passage formed in the inner casing;
FIG. 4A is a fragmentary perspective view showing one of the microswitches;
FIG. 4B is a fragmentary front view showing the microswitch;
FIG. 5A is a perspective view showing one of microswitches mounted to an inner casing of a handle switch device according to a second embodiment of this invention;
FIG. 5B is a perspective view showing a part of a mounting face of the inner casing before the microswitches are mounted thereon;
FIG. 5C is a rear perspective view showing one of the microswitches;
FIG. 6A is a front view showing one of the microswitches mounted to the mounting face of the inner casing;
FIG. 6B is a side view of the microswitch;
FIG. 6C is a section view taken along line B-B shown in FIG. 6A;
FIG. 7A is a front view showing a part of the mounting face of the inner casing;
FIG. 7B is a rear view showing one of the microswitches; and
FIG. 7C is a section view taken along line C-C shown in FIG. 6B.

### DESCRIPTION OF THE EMBODIMENTS

The present invention will now be described in detail below with reference to the drawings showing preferred embodiments thereof.

### (First Embodiment)

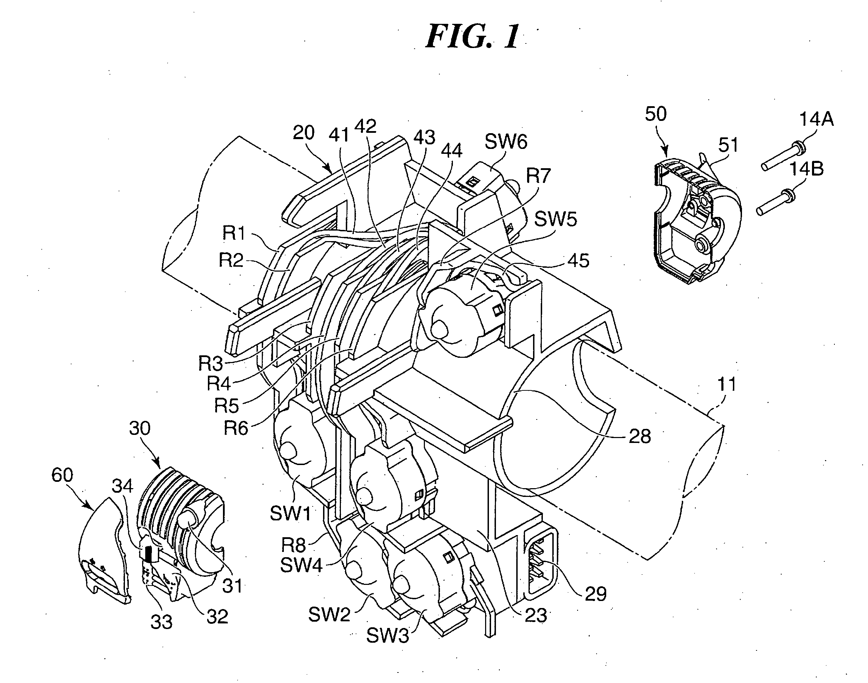

FIG. 1 is an exploded perspective view of a handle switch device according to a first embodiment of this invention.

The handle switch device is mounted to a handle of a vehicle, e.g., a handle pipe 11 of a handle of a motorcycle.

The handle switch device mainly includes an inner casing 20, a front casing 30, a rear casing 50, and a design panel 60. In FIG. 1, for convenience of illustration, the front casing 30, rear casing 50, and design panel 60 are illustrated on a smaller scale than the inner casing 20.

The direction and position in which the handle switch device is mounted to the handle pipe 11 are not limited, and the mounting position of the handle switch device around the axis of the handle pipe 11 is not limited. In the illustrated example, the handle switch device is upwardly mounted to a portion of the handle pipe 11, which is on the left side of the handle, such that the design panel 60 is disposed on the driver side and the rear casing 50 is disposed on the side to which the vehicle runs. In the following, the driver side of the handle switch device will be sometimes referred to as the front side of the handle switch device, and the side of the handle switch device to which the vehicle runs will be sometimes referred to as the rear side of the handle switch device.

The inner casing 20 is disposed on the outer periphery of the handle pipe 11. Microswitches SW1 to SW6 are mounted on the outer side of an annular portion 28 of the inner casing 20. The microswitches SW1 to SW5 are mounted to a mounting face 23 of the inner casing 20 at a part of the mounting face 23 which is directed to the driver side. The microswitch SW6 is mounted to the mounting face 23 at a part (not shown) of the mounting face 23 which is directed to the rear side. In the following, one or more of the microswitches SW1 to SW6 will be sometimes denoted by symbol SW collectively or without distinction.

The front casing 30 cooperates with the rear casing 50 to constitute an outer casing. These casings 30, 50 are fastened and fixed together by means of fasteners, e.g., mounting screws 14A, 14B so as to sandwich the inner casing 20 from front and rear, and are disposed on the outer periphery of the inner casing 20. The design panel 60 is mounted to an outer peripheral face of the front casing 30.

The front casing 30 and the rear casing 50 are provided with manipulating members respectively corresponding to the microswitches SW. More specifically, the front casing 30 is provided with a manipulating member 34 corresponding to the microswitches SW1, SW4 and provided with manipulating members 33, 32, 31 respectively corresponding to the microswitches SW2, SW3, and SW5. The rear casing 50 is provided with a manipulating member 51 corresponding to the microswitch SW6.

The design panel 60 made of aluminum or carbon fiber or the like is formed into an arcuate shape in cross section conforming to the outer periphery of the front casing 30, and is mounted to the front casing 30. The inner casing 20 is made of resin or the like, and has the annular portion 28 through which the handle pipe 11 is inserted. The rear casing 50 is made of resin or the like, and positioned in the axial and circumferential directions of the handle pipe 11 by means of a positioning boss (not shown) formed on the handle pipe 11.

As previously described, the front casing 30 and the rear casing 50 are fastened and fixed together by means of the mounting screws 14A, 14B, while holding therebetween the inner casing 20 on which the microswitches SW are disposed, whereby the inner casing 20 is engaged with the front casing 30 and positioned in the axial and circumferential directions of the handle pipe 11.

In FIG. 1, reference numeral 29 denotes a connector, and reference numerals 41 to 45 denote electric cords. Symbols R1 to R8 denote partition ribs.

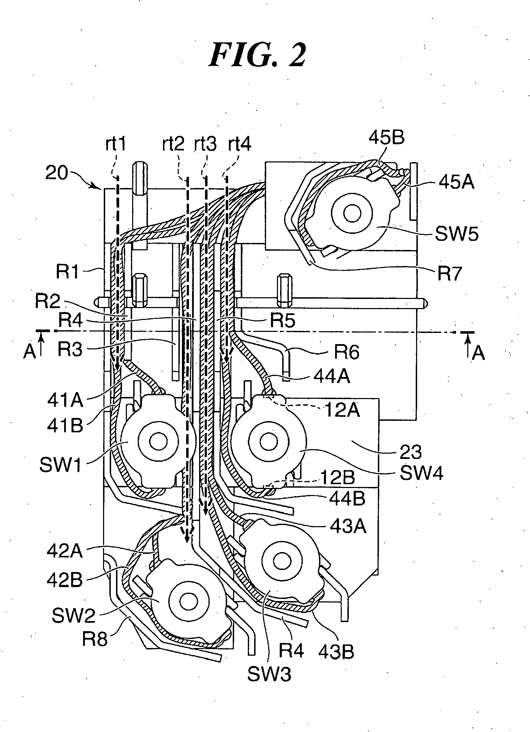

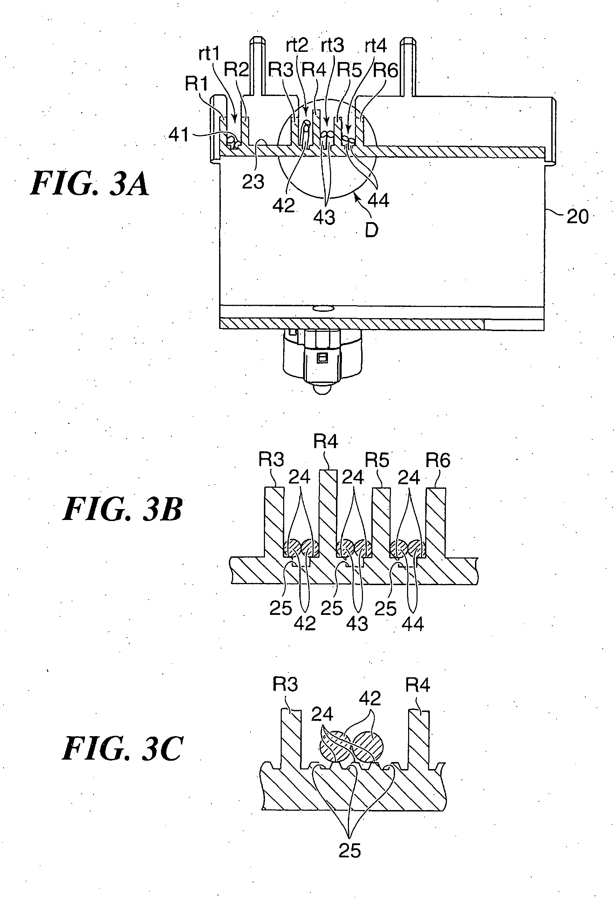

FIG. 2 shows the inner casing 20 on which the microswitches SW are disposed in front view as seen from the driver side. FIG. 3A is a section view taken along line A-A in FIG. 2, and FIG. 3B is an enlarged view showing a D part shown in FIG. 3A.

The microswitches SW1 to SW6 are electrically connected to a power supply and accessories of the vehicle, which are not shown, through the electric cords 41A, 41B to 45A, 45B (which are denoted by reference numerals 41 to 45 in FIG. 1 and respectively correspond to the microswitches SW1 to SW5), electric cords (not shown) corresponding to the microswitch SW6, and the connector 29.

The microswitch SW4 has a negative and positive connection terminals 12A, 12B to which the electric cords 44A, 44B are respectively connected. Similarly, the microswitches SW1 to SW3, SW5, and SW6 have negative and positive connection terminals to which the electric cords 41A, 41B; 42A, 42B; 43A, 43B; and 45A, 45B and the electric cords (not shown) are respectively connected.

As shown in FIGS. 1 and 2, the partition ribs R1 to R8 (hereinafter, one or more of these ribs will be sometimes denoted by symbol R collectively or without distinction) are formed on a face of the inner casing 20, which is substantially directed to the driver side, so as to project from the inner casing face toward the driver side. In a state where the inner casing 20 is mounted to the handle pipe 11, each of the partition ribs R extends in a vertical direction. Each rib R is formed into a shape having no portions that are slanted upward relative to a horizontal plane in a state that the inner casing 20 is mounted to the handle pipe 11.

The partition ribs R each partitioning between corresponding adjacent microswitches SW define passages rt1 to rt4 for respective microswitches SW. Hereinafter, one or more of the passages rt1 to rt4 are denoted by symbol rt collectively or without distinction. These partition ribs R do not completely partition between the microswitches SW, but advantageously increase creepage distances between the microswitches SW and prevent the electric insulation between the microswitches SW from decreasing due to water entering the surface of the inner casing 20.

As previously described, the inner casing 20 is provided with the partition rib R1 to R8. Among these, the partition rib R7 is provided at an upper part of the inner casing 20, and the partition rib R8 is provided at a lower part of the inner casing 20.

The partition rib R1 has a curved lower portion that partitions between the microswitches SW1 and SW2. The partition rib R4 extends through between the microswitches SW1, SW2 and the microswitches SW3, SW4, and partitions between the microswitches SW1, SW2 and SW3, SW4. The partition rib R5 has a curved lower portion that partitions between the microswitches SW3 and SW4. The microswitches SW1 to SW4 and the microswitch SW5 are partitioned therebetween by the partition ribs R6 and R7.

As shown in FIGS. 2 and 3A, the passage rt1 is defined by a straight portion of the partition rib R1 and the partition rib R2, and the electric cords 41 are wired to pass through the passage rt1. In other words, the partition ribs R1, R2 achieve a wiring guide function for the electric cords 41. The electric cords 42 are wired to extend through the passage rt2 defined by the partition rib R3 and a straight portion of the partition rib R4, whereby a wiring guide function for the electric cords 42 is achieved.

Similarly, the electric cords 43 are wired to extend through the passage rt3 defined by a straight portion of the partition rib R4 and a straight portion of the partition rib R5, whereby a wiring guide function for the electric cords 43 is achieved. The electric cords 44 are wired to extend through the passage rt4 defined by a straight portion of the partition rib R5 and a straight portion of the partition rib R6, whereby a wiring guide function for the electric cords 44 is achieved.

Since the electric cords 41 to 44 are closely wired together, they are difficult to handle. However, the wiring guide functions of the partition ribs R make it easy to perform an operation for wiring the electric cords.

The passages rt also function as water drain passages. Thus, water flowing through one of the passages rt is prevented from contacting water that flows through another passage rt, whereby electric insulation between the microswitches SW can be increased. However, there is a fear that the flows of water in the passages rt are hindered by the electric cords.

To obviate this, the passages rt2 to rt4 are each formed at its bottom face with a water drain groove 25, as shown in FIG. 3B. Although not shown in FIG. 3B, a similar drain groove is formed in a bottom face of the passage rt1. Each water drain groove 25 is formed to have a size where corresponding ones of the electric cords 41 to 44 cannot enter. The electric cords 41 to 44 are disposed in contact with or above cord receiving portions 24, which are constituted by the bottom faces of the passages rt1 to rt4, whereby water mainly flows through the drain grooves 25 and the flows of drain water are prevented from being disturbed by the electric cords 41 to 44.

In a modification shown in FIG. 3C, the passages rt are each formed with narrow drain grooves 25 that are arranged in parallel to one another and formed as a whole into a waveform shape whose crests constitute a cord receiving portion 24 with which corresponding ones of the electric cords 41 to 44 are in contact.

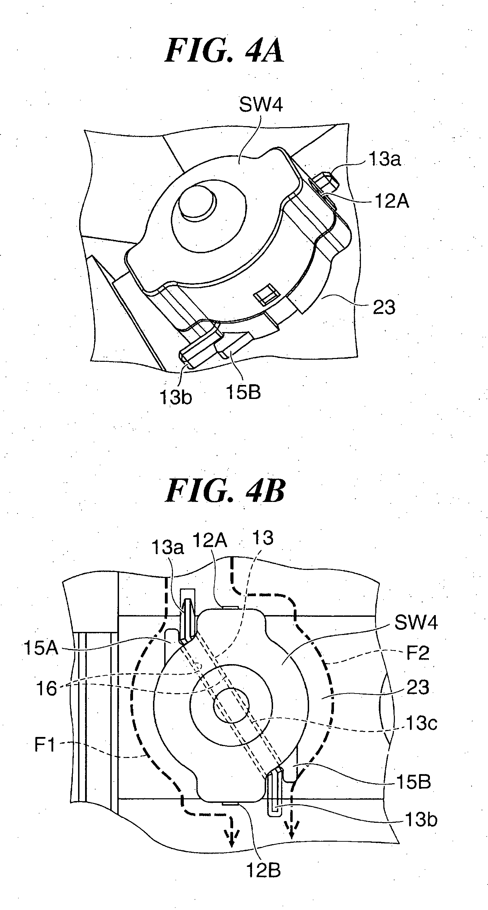

In the following, a description will be given of the construction of the microswitches SW by taking the microswitch SW4 as a typical example. FIGS. 4A and 4B show the microswitch SW4 in perspective and front views.

As shown in FIG. 4B, the mounting face 23 of the inner casing 20 is formed with a projection 13 corresponding to the microswitch SW4. The projection 13 has a straight portion 13c and bent portions 13a, 13b respectively extending vertically from both ends of the straight portion 13c. The microswitch SW4 has a rear face (or a mounted face) facing the mounting face 23 of the inner casing 20 and formed with an engagement groove 16 for engagement with the straight portion 13c of the projection 13. The microswitch SW4 is formed with protrusions 15A, 15B that are disposed in contact with or close to the bent portions 13a, 13b.

With the above-described construction, the flow of water flowing from above through the passage rt4 between the partition ribs R5, R6 is divided by the projection 13 into two flows, one of them flowing along one outer face side of the microswitch SW4 and the other flowing along another outer face side of the microswitch SW4, as shown by arrows F1, F2 in FIG. 4B, thereby suppressing water from flowing between the negative and positive connection terminals 12A, 12B of the microswitch SW4. As a result, the electrical insulation between the connection terminals 12A, 12B can be enhanced.

The microswitch SW4 is positioned relative to the inner housing 20 by the engagement between the engagement groove 16 of the microswitch SW4 and the straight portion 13c of the projection 13 formed in the mounting face 23 of the inner casing 20. Although a method for mounting the microswitch SW4 to the mounting face 23 of the inner casing 20 is not limited, the microswitch SW4 can be mounted thereto by e. g. snap fitting of engagement pieces and engagement pawls, as with a second embodiment described later.

To mount the handle switch device to the handle pipe 11, the microswitches SW connected with the electric cords are disposed on the inner casing 20, and the handle pipe 11 is inserted through the annular portion 28 of the inner casing 20. Next, the rear casing 50 is positioned on the handle pipe 11 and temporarily mounted to the handle pipe 11 so as to cover the inner casing 20 from the rear. Next, the design panel 60 is mounted to the front casing 30 from the front, and the resultant assembly is temporarily mounted to the inner casing 20 from the front. Then, the rear casing 50 is fixed to the front casing 30 by means of the mounting screws 14A, 14B.

With the above-described first embodiment, the partition ribs R are provided so as to partition between the microswitches SW, whereby long creepage distances can be ensured between adjacent ones of the microswitches SW. The function of drain passages for respective electric cords is achieved by the passages rt defined by the partition ribs R, whereby water entering the surface of the inner casing 20 from the outside of the handle switch device can be drained, while being divided into separate flows flowing through the passages rt for the respective microswitches SW. As a result, electric insulation between the microswitches SW can be enhanced. It is therefore possible to reduce the mounting distances between the microswitches SW. This is advantageous in making the handle switch device compact and in increasing the degree of freedom in mounting the handle switch device on the handle pipe.

In addition, the partition ribs R are each formed into a shape having no portions that are slanted upward relative to a horizontal plane in a state that the inner casing 20 is mounted to the handle pipe 11, so that water does not stay in the passages rt defined by the ribs R, whereby water drainage ability can be enhanced. Since the passages rt are each provided with the cord receiving portion 24 for receiving corresponding ones of the electric cords and the water drain groove 25 disposed beneath and in communication with the cord receiving portion 24, water hardly adheres to the electric cords disposed in the passages rt and drain water can be smoothly drained off.

Furthermore, since the mounting face 23 of the inner casing 20 is provided with the projections 13 for respective microswitches SW and since the microswitches SW are provided with the engagement grooves 16 to which the projections 13 are engaged, the flow of water flowing through each of the passages rt for respective microswitches SW is divided by the corresponding projection 13 into the flow flowing along one outer face side of the microswitch SW and the flow flowing along another outer face side of the microswitch SW, thereby preventing water from flowing between the two connection terminals of each microswitch SW to enhance the electrical insulation between these connection terminals.

As described above, a double-stage electrical insulating mechanism is provided where electrical insulation between the microswitches SW is enhanced by the partition ribs R and electrical insulation between the connection terminals of each microswitch SW is enhanced by the corresponding projection 13. Accordingly, it becomes unnecessary to apply insulation paint, thereby contributing to reduction in costs.

The wiring guide function of the passages rt makes it easy to handle the electric cords and prevents cords from being caught in between the handle pipe 11 and the inner casing 20 and from being entangled with one another, whereby a wiring operation can be carried out with ease. In addition, since the passages rt not only achieve the wiring guide function but also achieve the drain passage, the number of component parts does not uselessly increase and the handle switch device becomes simple in construction.

It should be noted that the installation positions of and the number of the microswitches SW are not limited to illustrated ones. For example, microswitches including the microswitch SW5 can be mounted on the rear side of the inner casing 20 and passages rt for these microswitches SW can be defined by partition ribs R, as with the microswitches SW1 to SW4 disposed on the front side of the inner casing 20.

### (Second Embodiment)

A handle switch device according to a second embodiment of this invention differs from the first embodiment in construction of the microswitches SW and in construction of parts of the inner casing 20 on which the microswitches SW are mounted, but is the same in other constructions as the first embodiment.

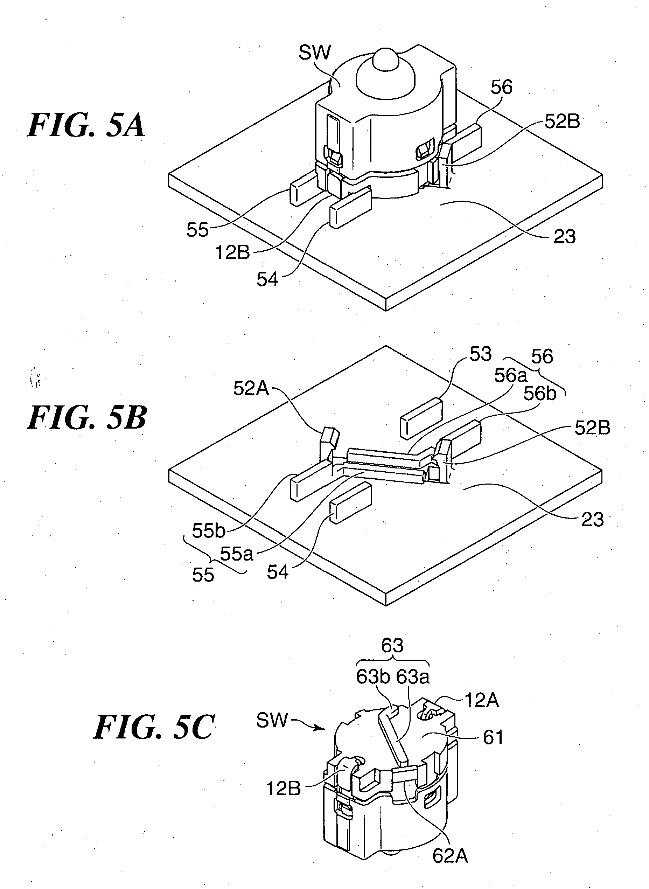

In FIGS. 5 to 7, the construction of one of the microswitches SW is shown by way of example. The other microswitches SW each have the same construction as the illustrated microswitch.

FIG. 5A shows in perspective view one of the microswitches SW mounted on the mounting face 23 of the inner casing 20. The mounting face 23 is a face substantially directed to the driver side, e. g. , an outer face of the annular portion 28 of the inner casing 20 or an outer face of a plate extending outwardly from the annular portion 28. FIG. 5B shows in perspective view the mounting face 23 before the microswitches SW are mounted thereon, and FIG. 5C shows one of the microswitches SW in rear perspective view.

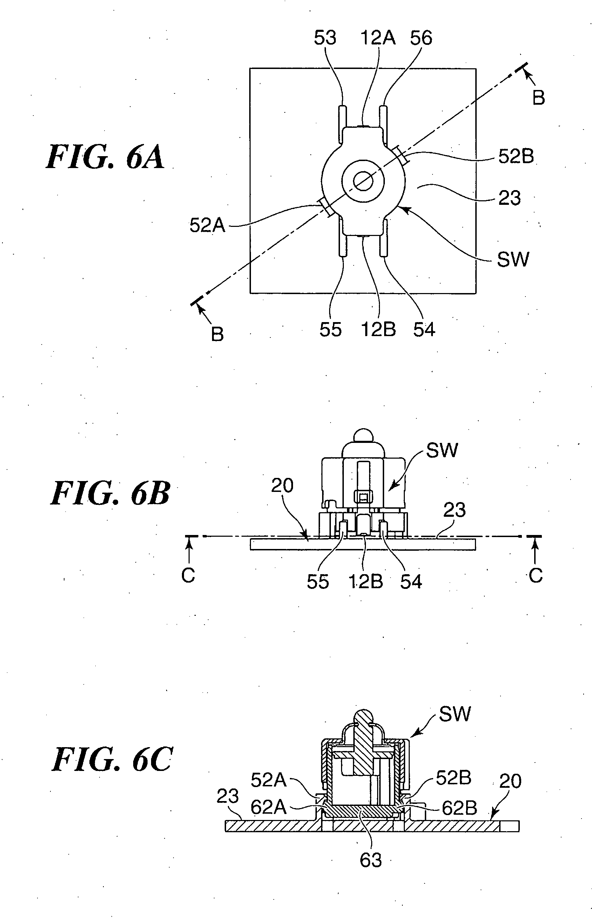

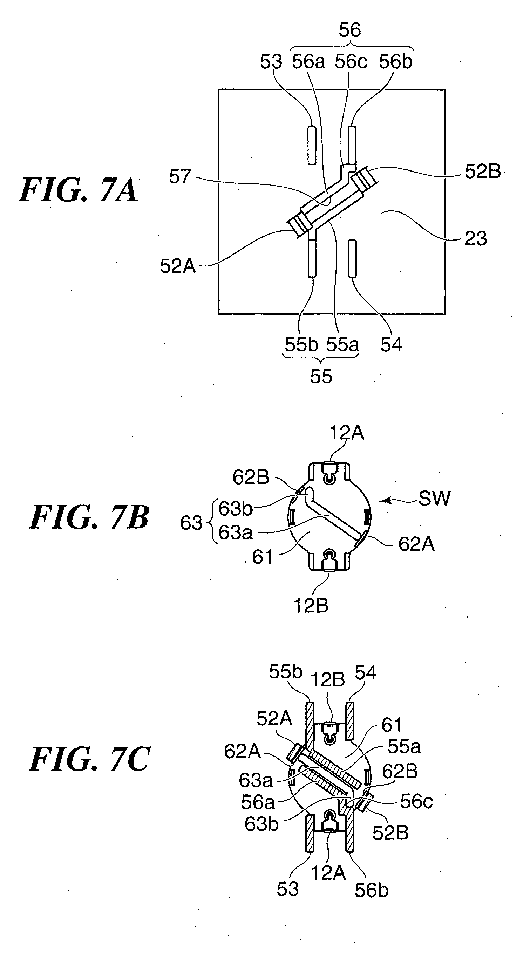

FIGS. 6A to 6C show one of the microswitches SW mounted to the mounting face 23 in front view, in side view, and in section view taken along line B-B in FIG. 6A. FIGS. 7A to 7C are a front view showing a part of the mounting face 23, a rear view showing one of the microswitches SW, and a section view taken along line C-C shown in FIG. 6B.

As shown in e.g. FIGS. 5B and 7A, the mounting face 23 of the inner casing 20 is integrally formed with first to fourth projections 55, 56, 53, and 54. The first projection 55 is formed into substantially a V-shape as seen from the front, and has an insulating rib 55a and a straight portion 55b. Similarly, the second projection 56 is formed into substantially a V-shape, and has an insulating rib 56a and a straight portion 56b, which are disposed parallel to the insulating rib 55a and the straight portion 55b of the first projection 55, respectively. An engagement groove 57 is defined by the insulating ribs 55a, 56a. The straight portion 55b of the projection 55 extends parallel to the projection 54, and the straight portion 56b of the projection 56 extends parallel to the projection 53. Engagement pawls 52A, 52B are formed on the mounting face 23 of the inner casing 20.

As shown in FIGS. 5C and 7B, the microswitch SW has a rear face 61 on which a projection 63 is formed between the negative and positive connection terminals 12A, 12B of the microswitch SW. The projection 63 has a straight portion 63a fitted into the engagement groove 57 defined by the insulating ribs 55a, 56a, and has a bent portion 63b obliquely extending from one end of the straight portion 63a. A connecting portion 56c formed into a shape complementary to the bent portion 63b of the projection 63 is provided between the insulating rib 56a and the straight portion 56b of the projection 56 (see FIGS. 7A and 7C).

By the engagement between the straight portion 63a of the projection 63 and the engagement groove 57 and by the engagement between the connecting portion 56c of the projection 56 and the bent portion 63b of the projection 63, a rotational direction position of the microswitch SW on a plane extending in parallel to the mounting face 23 of the inner casing 20 is uniquely determined (see, e.g. FIG. 7C). Engagement pieces 62A, 62B are provided on the outer periphery of the microswitch SW to correspond to the engagement pawls 52A, 52B formed on the mounting face 23.

With the above-described construction, in order to mount the microswitches SW on the mounting face 23 of the inner casing 20, each microswitch SW is positioned relative to the mounting face 23 such that the connecting portion 56c of the projection 56 formed on the mounting face 23 and the bent portion 63b of the projection 63 of the microswitch SW are engaged with each other, and the straight portion 63a of the projection 63 is fitted into the engagement groove 57 defined by the insulating ribs 55a, 56a of the projections 55, 56. At that time, the engagement piece 62A, 62B of the microswitch SW are engaged with the engagement pawls 52A, 52B formed on the mounting face 23, whereby the microswitch SW is easily mounted to the mounting face 23 by snap fitting (see FIG. 6C).

The projection 63 of each microswitch SW is formed into a non-symmetrical shape and has the bent portion 63b engaged with the connecting portion 56c of the projection 56 formed on the mounting face 23 of the inner casing 20, whereby the microswitch SW is correctly positioned relative to the mounting face 23. It is therefore possible to prevent the microswitch SW from being mounted to the mounting face 23 in a state where the negative and positive connection terminals of the microswitch SW are incorrectly disposed in reverse positions.

By the projections 55, 56 formed on the mounting face 23 and by the projection 63 formed on the rear face 61 of the microswitch SW, the flow of water entering the microswitch SW is divided into the flow flowing along one outer surface side of the microswitch SW and the flow flowing along another outer face side of the microswitch, whereby the electrical insulation between the connection terminals 12A, 12B of the microswitch SW can be enhanced.

With the above-described second embodiment, it is possible to achieve the effect to increase the electrical insulation between microswitches SW and the electrical insulation between connection terminals of each microswitch SW with a simple construction and the effect to make it easy to mount the handle switch device to the handle, as with the case of the first embodiment.

Furthermore, since each of the microswitches SW can be correctly positioned relative to the mounting face 23 of the inner casing 20 by engaging the connecting portion 56c of the protrusion 56 formed on the mounting face 23 with the bent portion 63b of the protrusion 63 of the microswitch SW, it is possible to prevent each microswitch SW from being mounted to the mounting face 23 in a state that the negative and positive connection terminals of the microswitch SW are incorrectly disposed in reverse positions.

It should be noted that projections can be provided in only either the rear faces 61 of microswitches SW or the mounting face 23 of the inner casing 20. Even in that case, the electrical insulation between the connection terminals of each microswitch SW can be enhanced by dividing the flow of water flowing toward the microswitch SW into two separate flows by the corresponding projection.

The projections 63 can be formed on the mounting face 23 of the inner casing 20 instead of forming them on the rear faces 61 of the microswitches SW, and the engagement grooves 57 to which the straight portions 63a of the protrusions 63 are engaged can be formed on the rear faces 61 of the microswitches SW instead of forming them on the mounting face 23 of the inner casing 20.

It should be noted that in each of the first and second embodiments, the inner casing 20 is formed into one piece and has the annular portion 28 through which the handle pipe 11 is inserted. Alternatively, the inner casing 20 can be formed into a two-split structure.

While the present invention has been described with reference to exemplary embodiments, it is to be understood that the invention is not limited to the disclosed exemplary embodiments.

## Claims

1. A handle switch device having an inner casing (20) disposed on an outer periphery of a handle (11) of a vehicle and an outer casing (30, 50) disposed on an outer periphery of the inner casing, comprising:
a plurality of switches (SW) disposed on the inner casing;
a plurality of ribs (R) provided on the inner casing and each configured to partition between corresponding ones of said switches; and
a plurality of passages (rt) defined by said ribs to correspond to respective ones of said switches and each configured to have a drain passage function and a wiring guide function for corresponding ones of electric cords (41 to 44) connected to said switches.

2. The handle switch device according to claim 1, wherein each of said ribs (R) is formed into a shape having no portions that are slanted upward in a state that the inner casing (20) is mounted to the handle (11).

3. The handle switch device according to claim 1, wherein said passages (rt) are each provided with a cord receiving portion (24) for receiving corresponding ones of the electric cords (41 to 44) and a water drain groove (25) disposed beneath and in communication with the cord receiving portion.

4. The handle switch device according to claim 1, wherein the inner casing (20) has a mounting face (23) on which said switches (SW) are mounted,
said switches (SW) each have a mounted face (61) facing the mounting face (23) of the inner casing and each have two connection terminals (12A, 12B) to which corresponding two of the electric cords are respectively connected, and
projections (13, 63) each configured to partition between the two connection terminals (12A, 12B) of a corresponding one of said switches are each formed on at least either the mounting face (23) of the inner casing or the mounted face (61) of the corresponding one of said switches.

5. The handle switch device according to claim 4, wherein said projections are each formed on one of the mounting face of said inner casing and the mounted face of the corresponding one of said switches, and
engagement portions (16, 57) configured for engagement with said projections are each formed in another of the mounting face of the inner casing and the mounted face of the corresponding one of said switches.

6. The handle switch device according to claim 5, wherein said projections (63) and said engagement portions (57) are formed into shapes that uniquely determine a rotational direction position of each of said switches on a plane extending in parallel to the mounting face of the inner casing.

## Patentansprüche

1. Griffschaltervorrichtung mit einem inneren Gehäuse (20), das an einem äußeren Umfang eines Griffs (11) eines Fahrzeugs angeordnet ist, und einem äußeren Gehäuse (30, 50), das an einem äußeren Umfang des inneren Gehäuses angeordnet ist, umfassend:
eine Vielzahl von Schaltern (SW), die an dem inneren Gehäuse angeordnet sind;
eine Vielzahl von Rippen (R), die an dem inneren Gehäuse vorgesehen sind und jeweils so ausgebildet sind, dass sie die entsprechenden Schalter voneinander abteilen; und
eine Vielzahl von Durchgängen (rt), die durch die Rippen begrenzt sind, so dass sie den jeweiligen Schaltern entsprechen und jeweils so ausgebildet sind, dass sie die Funktion eines Abflusskanals und die Funktion einer Verkabelungsführung für die jeweiligen elektrischen Kabel (41 bis 44), die mit den Schaltern verbunden sind, haben.

2. Griffschaltervorrichtung nach Anspruch 1, wobei jede der Rippen (R) so geformt ist, dass sie in einem Zustand, in dem das innere Gehäuse (20) an dem Griff (11) montiert ist, keine Abschnitte aufweist, die nach oben schräg gestellt sind.

3. Griffschaltervorrichtung nach Anspruch 1, wobei die Durchgänge (rt) jeweils mit einem Kabelaufnahmeabschnitt (24) zur Aufnahme der jeweiligen elektrischen Kabel (41 bis 44) und einer unterhalb und in Verbindung mit dem Kabelaufnahmeabschnitt angeordneten Wasserablaufrinne (25) versehen sind.

4. Griffschaltervorrichtung nach Anspruch 1, wobei das innere Gehäuse (20) eine Montagefläche (23) hat, auf der die Schalter (SW) montiert sind,
wobei die Schalter (SW) jeweils eine montierte Fläche (61), die der Montagefläche (23) des inneren Gehäuses gegenüberliegt, und jeweils zwei Verbindungsanschlüsse (12A, 12B) haben, mit welchen die entsprechenden zwei der elektrischen Kabel jeweils verbunden sind, und
wobei Vorsprünge (13, 63), die jeweils so ausgebildet sind, dass sie die beiden Verbindungsanschlüsse (12A, 12B) eines jeweiligen Schalters voneinander abteilen, jeweils auf zumindest der Montagefläche (23) des inneren Gehäuses oder der montierten Fläche (61) des jeweiligen Schalters gebildet sind.

5. Griffschaltervorrichtung nach Anspruch 4, wobei die Vorsprünge jeweils an der Montagefläche des inneren Gehäuses bzw. der montierten Fläche des entsprechenden Schalters gebildet sind und wobei zum Eingriff mit den Vorsprüngen ausgebildete Eingriffabschnitte (16, 57) jeweils in der anderen Montagefläche des inneren Gehäuses bzw. der montierten Fläche des entsprechenden Schalters gebildet sind.

6. Griffschaltervorrichtung nach Anspruch 5, wobei die Vorsprünge (63) und die Eingriffabschnitte (57) so geformt sind, dass ihre Form eine Drehrichtungsposition jedes Schalters auf einer Ebene, die sich parallel zur Montagefläche des inneren Gehäuses erstreckt, eindeutig bestimmt.

## Revendications

1. Dispositif de commutation de poignée ayant un boîtier intérieur (20) disposé sur une périphérie extérieure d'une poignée (11) d'un véhicule et un boîtier extérieur (30, 50) disposé sur une périphérie extérieure du boîtier intérieur, comprenant :
une pluralité de commutateurs (SW) disposés sur le boîtier intérieur,
une pluralité de nervures (R) prévues sur le boîtier intérieur et chacune configurées pour réaliser une partition entre des commutateurs correspondants parmi lesdits commutateurs, et
une pluralité de passages (rt) définis par lesdites nervures pour correspondre à des commutateurs respectifs parmi lesdits commutateurs et chacun configurés pour avoir une fonction de passage de drainage et une fonction de guidage de câblage pour des fils correspondants parmi des fils électriques (41 à 44) connectés auxdits commutateurs.

2. Dispositif de commutation de poignée selon la revendication 1, dans lequel chacune desdites nervures (R) est formée suivant une forme n'ayant aucune partie qui est inclinée vers le haut dans un état dans lequel le boîtier intérieur (20) est monté sur la poignée (11).

3. Dispositif de commutation de poignée selon la revendication 1, dans lequel lesdits passages (rt) sont chacun dotés d'une partie de réception de fils (24) destinée à recevoir des fils correspondants parmi les fils électriques (41 à 44) et une rainure de drainage d'eau (25) disposée en dessous de la partie de réception de fils et en communication avec celle-ci.

4. Dispositif de commutation de poignée selon la revendication 1, dans lequel le boîtier intérieur (20) possède une face de montage (23) sur laquelle lesdits commutateurs (SW) sont montés,
lesdits commutateurs (SW) ont chacun une face montée (61) orientée vers la face de montage (23) du boîtier intérieur et ont chacun deux bornes de connexion (12A, 12B) auxquelles deux fils correspondants parmi les fils électriques sont respectivement connectés, et
des protubérances (13, 63) chacune configurées pour réaliser une partition entre les deux bornes de connexion (12A, 12B) d'un commutateur correspondant parmi lesdits commutateurs sont chacune formées sur au moins soit la face de montage (23) du boîtier intérieur soit la face montée (61) du commutateur correspondant parmi lesdits commutateurs.

5. Dispositif de commutation de poignée selon la revendication 4, dans lequel lesdites protubérances sont chacune formées sur l'une de la face de montage dudit boîtier intérieur et de la face montée du commutateur correspondant parmi lesdits commutateurs, et
des parties d'engagement (16, 57) configurées pour un engagement avec lesdites protubérances sont chacune formées dans une autre de la face de montage du boîtier intérieur et de la face montée du commutateur correspondant parmi lesdits commutateurs.

6. Dispositif de commutation de poignée selon la revendication 5, dans lequel lesdites protubérances (63) et lesdites parties d'engagement (57) sont formées suivant des formes qui déterminent de manière unique une position de direction de rotation de chacun desdits commutateurs sur un plan s'étendant parallèlement à la face de montage du boîtier intérieur.
